# EUROPEAN PATENT SPECIFICATION

(11) **EP 0 659 318 B1**
(45) Date of publication and mention of the grant of the patent: **12.05.1999**
(21) Application number: 93919797.6
(22) Date of filing: 09.09.1993
(51) Int. Cl.: H04M 1/04, B60R 11/02, F16M 13/02

(54) **A PORTABLE MOUNTING DEVICE, PRIMARILY FOR ELECTRICAL EQUIPMENT**
TRAGBARE HALTERUNGSVORRICHTUNG, INSBESONDERE FÜR EIN ELEKTRISCHES GERÄT
SUPPORT DE MONTAGE PORTABLE, DESTINE PRINCIPALEMENT A UN EQUIPEMENT ELECTRIQUE

(30) Priority: 09.09.1992 SE 9202599
(43) Date of publication of application: 28.06.1995
(73) Proprietor: Europlast AB, 912 32 Vilhelmina (SE)
(72) Inventor: NYFELT, Leif, S-541 92 Skövde (SE)
(74) Representative: Örtenblad, Bertil Tore
(86) International application number: SE9300737
(87) International publication number: WO9406234

(56) References cited:
- GB-A- 2 109 048
- SE-B- 465 798
- SE-B- 467 558
- US-A- 5 048 083

## Description

The present invention relates to a portable mounting device, primarily for electrical equipment.

In the present context, the term electrical equipment is meant to include mobile telephones, radio communication equipment, leisure craft navigational equipment, and like equipment.

Pocket telephones, for instance, are normally carried constantly on the user's person. The user will normally have in his/her motor vehicle a fixed telephone mount to which the telephone can be attached. A mounting device for a vehicle mobile phone is e.g. described in SE-B-467 558. However, on those occasions when the user is not in his/her vehicle, the user is liable to put down the telephone in any one of a number of different places.

There is often a need to place the telephone firmly in a holder also on these latter occasions, among other things to prevent the telephone from being carelessly moved from place to place and possibly being damaged. For instance there is at times a need to place the telephone in a holder when the user is in a motor vehicle other than his/her own for instance. However, different telephones have different shapes and consequently a telephone holder will be specific to a certain model of telephone. It is not sufficient for a motor vehicle merely to be equipped with a telephone holder, since the holder must be adapted to that particular telephone.

A particular need is found in the present aspect in the case of professional drivers, chauffeurs, and those who drive different/operate different types of working machines, where the person concerned changes between different vehicles and/or machines.

There is also a need to be able to mount both a portable telephone and, for instance, portable navigational equipment in leisure craft in a simple and efficient manner.

The present invention solves these problems by providing a mounting device which can be attached to all types of surface and which can be angled so as to bring the telephone or other piece of equipment to a suitable position in relation to a driving place, for instance.

The present invention thus relates to a portable mounting device, primarily for mobile electronic equipment, such as mobile telephones for instance, and is characterized in that the mounting device includes two suction cups of a known kind that can be applied to and removed from a supportive surface, in that an intermediate member is connected pivotally to each of the suction cups; in that the intermediate member includes two parts which are mutually connected by hinge means; and in that the intermediate member has at least one flat surface for supporting said equipment.

The invention will now be described in more detail with reference to an exemplifying embodiment thereof and also with reference to the accompanying drawing, in which
- Figure 1 illustrates a first embodiment of an inventive mounting device;
- Figure 2 illustrates a second embodiment of an inventive mounting device; and
- Figure 3 illustrates the mounting device shown in Figure 1, but with a telephone holder fitted thereto.

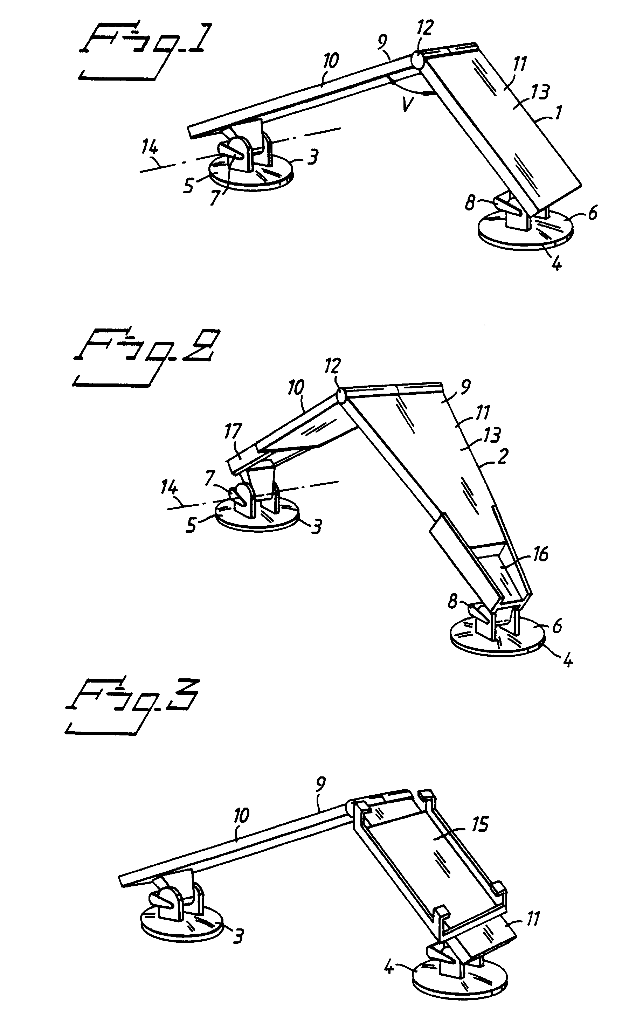

Figures 1 and 2 respectively illustrate an inventive mounting device which is intended primarily to support mobile electronic equipment.

The mounting device 1,2 includes two suction cups 3,4 of a known kind that can be applied to and removed from a supportive surface, each of said cups comprising a curved or cupped, rigid plate 5,6, a moveable rubber diaphragm mounted on the undersurface of respective cups, and a cup maneuvering lever 7,8. By placing the undersurface of a suction cup against a flat surface and moving the diaphragm upwards with the aid of the lever 7 or 8, there is generated between the rubber diaphragm and the flat surface a subpressure which draws the cup against the surface with a very powerful suction force.

The mounting device also includes an intermediate member 9 which is connected pivotally to each of the suction cups 3,4.

The intermediate member 9 comprises two parts 10, 11 which are joined mutually by a hinge means 12 and includes a flat surface 13 on which said equipment can be mounted.

The intermediate member 9 is hingedly connected to respective suction cups about an axis 14, shown as a broken line on one suction cup in Figures 1 and 2.

According to one preferred embodiment, the hinge means 12 of the intermediate member 9 has a pivot axis which extends parallel with the aforesaid axis 14.

Since both the intermediate member 9 is hinged and the two parts of the intermediate member are hinged relative to respective suction cups, the angle V defined by the two parts 10, 11 can be greatly varied. Furthermore, the suction cups can be attached to different surfaces of an object where the surfaces are not parallel with one another.

According to one preferred embodiment of the invention the hinge means 12 divides the intermediate member 9 into parts 10, 11 of essentially the same length. This enables the parts 10, 11 to be adjusted to a small angle V therebetween and the suction cups to be attached to one and the same flat attachment surface.

The inventive mounting device can thus be attached readily to all manner of objects. The angle V can also be varied readily to suit the desired position of the object supported by the inventive mounting device.

Figure 3 illustrates an inventive mounting device with a pocket telephone holder 15 mounted on one, 11, of the two parts 10, 11 of the intermediate member 9, said holder being either glued or screwed to said member. Alternatively, the telephone holder 15 may be fixed to intermediate member 9 by means of a conventional burr fastener means or Velcro fastener.

As will be understood, the inventive mounting device may be constructed to support either light or heavy objects. In the case of the embodiment illustrated in Figure 1, the two parts 10, 11 of the intermediate member 9 are two simple flat plastic parts which are, for instance, glued to respective suction cup hinges. This device is intended for light equipment. The embodiment illustrated in Figure 2 is of more robust construction and includes, among other things, load-bearing beam-sections 16, 17. This embodiment is intended to support heavier objects.

It will be understood that the inventive mounting device may be manufactured from metal instead of from a plastic material.

Examples of light equipment are pocket telephones, hand-carried satellite navigational aids, pocket calculators, and similar devices, while examples of heavier equipment are portable telephones of the kind with which the telephone receiver is connected to a separate unit containing electronics or a battery, where the separate unit is mounted on the inventive device.

An inventive mounting device which is intended to support a pocket telephone holder can be made small and light in weight.

Furthermore, the hinge 12 of the intermediate member can be constructed in a manner which will enable the two parts 10, 11 of said member to be folded one against the other, ie so that the undersurfaces of the parts 10, 11 lie in mutual abutment, therewith reducing the volume of the device. This enables the device to be carried easily by those who desire a portable telephone holder that can be fitted quickly and easily to appropriate supportive surfaces on cars, boats, etc.

Although the invention has been described above with reference to different embodiments thereof, it will be understood that the invention is not restricted hereto and that various modifications and changes can be made. The invention is therefore limited only by the scope of the following claims.

## Claims

1. A portable mounting device, primarily for electrical equipment, such as mobile telephones for instance, **characterized** in that the mounting device (1; 2) includes two suction cups (3, 4) of a known kind that can be applied to and removed from a supportive surface; in that an intermediate member (9) is connected pivotally to each of the suction cups (3, 4); in that the intermediate member (9) includes two parts (10, 11) which are mutually connected by hinge means (12); and in that the intermediate member (9) has at least one flat surface (13) for supporting said equipment.

2. A portable mounting device according to Claim 1, **characterized** in that the intermediate member (9) is pivotally connected to respective suction cups (3, 4) about an axis (14).

3. A portable mounting device according to Claim 2, **characterized** in that the hinge means (12) of the intermediate member (9) has a pivot axis which extends parallel with the first mentioned pivot axis (14).

4. A portable mounting device according to Claim 1, 2 or 3, **characterized** in that the hinge means (12) of the intermediate member (9) divides the intermediate member (9) into two parts (10, 11) of essentially mutually equal lengths.

## Patentansprüche

1. Bewegliche Halterungsvorrichtung insbesondere für elektrische Geräte wie z. B. Mobiltelefone, **dadurch gekennzeichnet**, daß die Halterungsvorrichtung (1; 2) zwei Saugnäpfe (3, 4) bekannter Art aufweist, die an einer abstützenden Oberfläche angebracht und von dieser entfernt werden können; daß ein Zwischenglied (9) schwenkbar mit jedem der Saugnäpfe (3, 4) verbunden ist; daß das Zwischenglied (9) zwei Teile (10, 11) aufweist, die miteinander durch eine Scharniereinrichtung (12) verbunden sind; und daß das Zwischenglied (9) wenigstens eine flache Oberfläche (13) zum Abstützen des Geräts aufweist.

2. Bewegliche Halterungsvorrichtung nach Anspruch 1, **dadurch gekennzeichnet**, daß das Zwischenglied (9) um eine Achse (14) schwenkbar mit den entsprechenden Saugnäpfeb (3, 4) verbunden ist.

3. Bewegliche Halterungsvorrichtung nach Anspruch 2, **dadurch gekennzeichnet**, daß die Scharniereinrichtung (12) des Zwischenglieds (9) eine Schwenkachse hat, die sich parallel zu der zuerst genannten Schwenkachse (14) erstreckt.

4. Bewegliche Halterungsvorrichtung nach Anspruch 1, 2 oder 3, **dadurch gekennzeichnet**, daß die Scharniereinrichtung (12) des Zwischenglieds (9) das Zwischenglied (9) in zwei Teile (10, 11) von im wesentlichen zueinander gleichen Längen unterteilt.

## Revendications

1. Support de montage portable, destiné principalement à un équipement électrique, tel que téléphones mobiles, par exemple, caractérisé en ce que le support de montage (1; 2) comporte deux ventouses (3, 4) d'un type connu qui peuvent être appliquées à et enlevées d'une surface portante; en ce qu'un élément intermédiaire (9) est raccordé à chacune des ventouses (3, 4) de manière à pouvoir pivoter; en ce que l'élément intermédiaire (9) comporte deux parties (10, 11) qui sont réciproquement raccordées par un moyen de charnière (12); et en ce que l'élément intermédiaire (9) présente au moins une surface plate (13) pour supporter ledit équipement.

2. Support de montage portable selon la revendication 1, caractérisé en ce que l'élément intermédiaire (5) est raccordé aux ventouses respectives (3, 4) de manière à pouvoir pivoter autour d'un axe (14).

3. Support de montage portable selon la revendication 2, caractérisé en ce que le moyen de charnière (12) de l'élément intermédiaire (9) présente un axe pivot qui s'étend parallèlement audit premier axe pivot (14).

4. Support de montage portable selon la revendication 1, 2 ou 3, caractérisé en ce que le moyen de charnière (12) de l'élément intermédiaire (9) divise l'élément intermédiaire (9) en deux parties (10, 11) dont la longueur réciproque est essentiellement égale.
